# EUROPEAN PATENT APPLICATION

(11) **EP 1 138 424 A1**
(43) Date of publication of application: **04.10.2001**
(21) Application number: 00201159.1
(22) Date of filing: 31.03.2000
(51) Int. Cl.: B23D 19/06

(54) **Method and apparatus for forming tapered sheets, and tapered sheets formed therewith**

(71) Applicant: Corus Bausysteme GmbH, 56070 Koblenz (DE)
(72) Inventor: Döhren, Hans-Jürgen, 55452 Guldental (DE); Kahlert, Wilfried, 56566 Neuwied (DE); Metzdorff, Bernhard, 56130 Bad Ems (DE)
(74) Representative: Kruit, J., Ir.

(57) **Abstract**

The invention relates to a method for forming a tapered sheet for building purposes, in which the tapered sheet is formed from a metal strip.

The method is characterised in that the tapered sheet is formed by shearing the metal strip in two places under an angle of α with a side of the metal strip and by shearing the metal strip in between these two places under an angle of 2α with the side of the metal strip, the shearing being performed in any order, to form a substantially symmetrical tapered sheet.

The invention also relates to an apparatus for forming a tapered sheet for building purposes, to form the tapered sheet from a metal strip.

The apparatus is characterised in that it comprises first shearing means so as to be able to make a cross cut under an angle α and second shearing means so as to be able to make a substantially longitudinal cut under an angle 2α in the metal strip.

## Description

The invention relates to a method for forming a tapered sheet for building purposes, in which the tapered sheet is formed from a metal strip. The invention also relates to an apparatus for forming a tapered sheet for building purposes, and a tapered sheet formed therewith.

Nowadays many buildings, and especially the roofs thereof, are constructed from metal panels. The sides of the metal panels are bent upwards, to form standing seams which are slidably attached to retaining clips.

When the roofs or walls are straight, it is simple to cut the panels from a metal strip and use them in that form to construct a roof or wall. However, modern buildings are designed with more complex forms, such as conical forms. For such forms straight panels cannot be used, and therefore tapered panels have to be available.

It is known to make tapered sheets for building purposes by cutting a strip perpendicular to the length direction of the strip, in the same way as straight panels are made, and then cutting the sheet lengthwise under an angle. In this way a tapered sheet with two right angles on one side of the tapered sheet is made.

These tapered sheets have the disadvantage that after the mounting of the sheets on a building, the tapered sheets stick out on the side where the lengthwise cut is made. These protruding ends must be removed, which requires extra work and leads to wastage of the strip material.

Of course it is known that symmetrical tapered metal sheets can for instance be formed by nibbling, laser cutting or water jet cutting. However, all these methods require expensive machines, which cannot be used on the site where the building is erected, and most important, the length of the tapered sheets thus formed is limited and mostly too short for building purposes.

It is an objective of the invention to provide a method and apparatus with which substantially symmetrical tapered sheets can be formed in a simple and fast manner.

It is another objective to provide such a method and apparatus which can be used on the site where a building is erected.

It is still another objective to provide such a method and apparatus which is easy to use and cheap.

According to a first aspect of the invention, one or more of these objectives is reached with a method for forming a tapered sheet for building purposes, in which the tapered sheet is formed from a metal strip, characterised in that the tapered sheet is formed by shearing the metal strip in two places under an angle of α with a side of the metal strip and by shearing the metal strip in between these two places under an angle of 2α with the side of the metal strip, the shearing being performed in any order, to form a substantially symmetrical tapered sheet.

In this way a symmetrical tapered sheet is formed by a simple shearing operation, like the shearing or cutting of the straight metal panels, but by cutting the metal strip under an angle of α, the tapered metal panel is directly given the intended symmetrical form.

Preferably the method comprises the following successive steps:
- providing a first cross cut in the metal strip by shearing the metal strip under an angle of α with the side of the metal strip;
- transporting the metal strip and shearing the metal strip under an angle of 2α with the side of the metal strip, starting from the first cross cut;
- providing a second cross cut in the metal strip by shearing the metal strip under an angle α with the side of the metal strip, parallel to the first cut;
- transporting of the metal strip and shearing under an angle of 2α, until the second cross cut is reached.

After the first cross cut under the required angle α is made the strip is transported, and after a short distance the shearing under the angle of 2α starts from the first cross cut, of course at the required point for the tapered sheet that has to be made. The transporting and the cutting continues until the second cross cut has to be made. For this the strip is preferably stopped, though the transport could go on while the second cross cut is made. Then the shearing under an angle of 2α goes on until the second cross cut is reached and the tapered sheet is finished. In this way, a tapered sheet can be produced in any required length.

According to a preferred embodiment, the second cross cut is used as the first cross cut for a successive tapered sheet. In this way a successive tapered sheet can be produced directly after the first sheet, without the need for a first cut, and without wastage. Of course this is only possible if the successive sheet requires the same angle α, but this is often the case.

Preferably the first and/or second cross cut under an angle of α are executed by using straight shears or a guillotine, and preferably the shearing under an angle of 2α during transportation is executed with a cutting roll. The cross cuts can be executed very fast with the straight shears or guillotine, and the cutting roll can shear any length of strip and thus cut any required length of tapered sheet.

An ongoing production of tapered sheets can be realised when the metal strip is provided on roll or coil.

Preferably, the metal of the metal strip is aluminium.

According to a second aspect of the invention, an apparatus for forming tapered sheet for building purposes is provided, to form the tapered sheet from a metal strip, characterised in that the apparatus comprises first shearing means so as to be able to make a cross cut under an angle α and second shearing means so as to be able to make a substantially longitudinal cut under an angle 2α in the metal strip.

With this apparatus, a tapered sheet with any required length can be made, using the method described above.

Preferably the first shearing means and the second shearing means are adjustable so as to be able to cut the metal strip under different angles. By adjusting the first and second shearing means, it is simple to change the production from tapered sheets with a certain angle α to tapered sheets with another angle α.

According to a preferred embodiment, the first shearing means are straight shears or a guillotine, and preferably the second shearing means is a cutting roll so as to shear when the metal strip is moving relative to the cutting roll. The straight shears or the guillotine can make the cross cuts very fast, and the cutting roll can make the substantially longitudinal cut over any required length.

Preferably, transporting means are provided in the apparatus so as to be able to transport the metal strip through the apparatus.

According to a preferred embodiment, control means are provided so as to perform the method according to the first aspect of the invention with the use of the apparatus. With the control means, the shearing of the first and second shearing means and the transportation of the strip can be controlled, so that the tapered sheets can be produced automatically or semi-automatically.

The invention will be elucidated referring to an exemplary embodiment, in view of the accompanying drawing.

Fig. 1 shows, in a schematic way, an embodiment of the invention in top view.

Fig. 2 shows the embodiment of fig. 1 in side view.

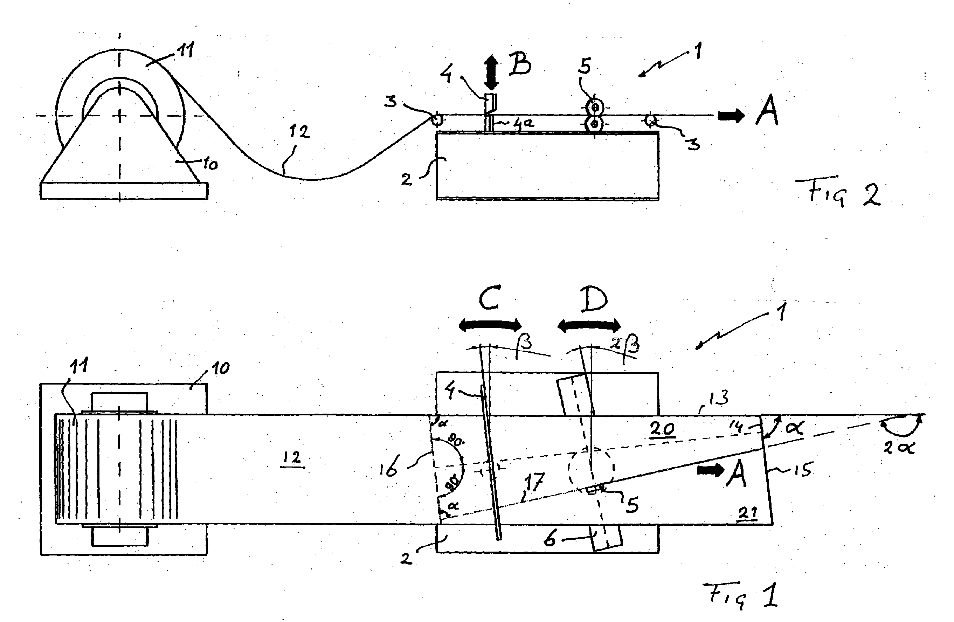

Fig. 1 and 2 show the apparatus 1 according to the invention, consisting of a frame 2 with rollers 3 for the metal strip from which tapered sheets are to be made, and straight shears 4, 4a and a cutting roll 5 on a guide 6. A decoiler 10 supports a coil 11 of the strip material 12 with a side 13, from which the tapered sheets 20 are cut.

Not shown are the adjusting means for adjusting the angle of the shears 4, 4a and the guide 6 for the cutting roll 5, and neither are the transporting means for transporting the strip 12 through the apparatus 1, and for removing the tapered sheet 20 and the scrap sheet 21 from the apparatus. Of course, supporting means are present for supporting the strip 12 in the apparatus and for supporting the tapered sheet 20 outside the apparatus, but these are also not shown.

The method for forming a tapered sheet is as follows.

A first cross cut 15 is made under an angle α with the side 13 of the strip 12, using the shears 4, 4a. The shears are placed under an angle β = 90° - α with the transverse direction of the strip.

Subsequently the strip is transported in direction A and after a short distance reaches the cutting roll 5, which is placed on the guide 6 such that the top end 14 of the tapered sheet 20 has the required width. The guide 6 is placed under an angle of 2α with the side 13 of the strip, or an angle of 2β with the transverse direction. During the further transportation of the strip 12, the side 17 of the tapered sheet 20 is formed by the cutting roll 5, which is guided over the guide 6 so as to form the side 17 under the angle of 2α.

When the base of the tapered sheet 20 reaches the shears 4, 4a, the transport of the strip is stopped and the strip is cut at the second cross cut 16 using the shears 4, 4a by the reciprocating movement B of shear 4.

Subsequently the cut-off part is transported further and the cutting roll 5 resumes the cutting of side 17, until the cut-off side 16 is reached and the tapered sheet 20 is finished. At the same time, the scrap sheet 21 is formed. Most times, the sheet 21 will have too small a top end and base to be usable. In exceptional cases, the scrap sheets 21 will also be usable for building purposes.

After a first tapered sheet is made, the second cross cut 16 under angle α can be used as first cross cut 15 for the next tapered sheet, so after positioning of the cutting roll 5 on the guide 6 the next sheet can be formed by cutting the side 17.

The shears 4, 4a and the guide 6 are adjustable in the directions C and D so as to be able to cut tapered sheets with different angles α. It will be possible to connect the shears 4, 4a and the guide 6, so that an adjustment of the shears 4, 4a with an angle γ will always lead to an adjustment of the guide 6 with an angle 2γ.

Due to the simple apparatus according to the invention, which is far shorter than the tapered sheets that are formed with it, the apparatus fits easily in a standard container and can therefore be easily transported to the site where a building is erected for which the tapered sheets are required.

It will be clear that where in the above a sheet is mentioned, this could also be a plate.

It will be understood that the invention is not limited to the construction as described above and shown in the figures. For instance, instead of shears 4, 4a a cutting roll could be used, to be moved over a guide that is adjustable as the shears 4, 4a are. And instead of the cutting roll 5 reciprocating shearing means could be used.

## Claims

1. Method for forming a tapered sheet for building purposes, in which the tapered sheet is formed from a metal strip, **characterised in that**, the tapered sheet is formed by shearing the metal strip on two places under an angle of α with a side of the metal strip and by shearing the metal strip in between these two places under an angle of 2α with the side of the metal strip, the shearing being performed in any order, to form a substantially symmetrical tapered sheet.

2. Method according to claim 1, **characterised in that**, the method comprises the following successive steps:
- providing a first cross cut in the metal strip by shearing the metal strip under an angle of α with the side of the metal strip;
- transporting the metal strip and shearing the metal strip under an angle of 2α with the side of the metal strip, starting from the first cross cut;
- providing a second cross cut in the metal strip by shearing the metal strip under an angle α with the side of the metal strip, parallel to the first cut;
- transporting the metal strip and shearing under an angle of 2α, until the second cross cut is reached.

3. Method according to claim 1 or 2, **characterised in that**, the second cross cut is used as the first cross cut for a successive tapered sheet.

4. Method according to claim 2 or 3, **characterised in that**, the first and/or second cross cut under an angle of α are executed by using straight shears or a guillotine, and preferably the shearing under an angle of 2α during transportation is executed with a cutting roll.

5. Method according to any one of the preceding claims, **characterised in that**, the metal strip is provided on roll or coil.

6. Method according to any one of the preceding claims, **characterised in that**, the metal of the metal strip is aluminium.

7. Apparatus for forming a tapered sheet for building purposes, to form the tapered sheet from a metal strip; **characterised in that**, the apparatus comprises first shearing means so as to be able to make a cross cut under an angle α and second shearing means so as to be able to make a substantially longitudinal cut under an angle 2α in the metal strip.

8. Apparatus according to claim 7, **characterised in that**, the first shearing means and the second shearing means are adjustable so as to be able to cut the metal strip under different angles.

9. Apparatus according to claim 7 or 8, **characterised in that**, the first shearing means are straight shears or a guillotine, and preferably the second shearing means is a cutting roll so as to shear when the metal strip is moving relative to the cutting roll.

10. Apparatus according to any one of the claims 7 - 9, **characterised in that**, transporting means are provided in the apparatus so as to be able to transport the metal strip through the apparatus.

11. Apparatus according to any one of the claims 7 - 10, **characterised in that**, control means are provided so as to perform the method according to any one of the claims 1 - 6 with the use of the apparatus.

12. Symmetrical tapered sheet for building purposes, formed by using the method according to any one of the claims 1 - 6 and/or made by using the apparatus according to any one of the claims 7 - 11.
